# EUROPEAN PATENT APPLICATION

(11) **EP 4 763 474 A1**
(43) Date of publication of application: **24.06.2026**
(21) Application number: 24880089.8
(22) Date of filing: 15.10.2024
(51) Int. Cl.: B29C 51/08, B29C 51/26, B29C 43/36, H01M 50/105, B29L 31/00

(54) **MOLDING APPARATUS AND MOLDING METHOD, AND POUCH-TYPE BATTERY CASE MANUFACTURED THEREBY**

(30) Priority: 17.10.2023 KR 20230138682; 14.10.2024 KR 20240139708
(71) Applicant: LG Energy Solution, Ltd., Seoul 07335 (KR)
(72) Inventor: KIM, Wan Ju, Daejeon 34122 (KR); LEE, Ji Hoon, Daejeon 34122 (KR); KOO, Sang Hyun, Daejeon 34122 (KR)
(74) Representative: Plasseraud IP
(86) International application number: PCT/KR2024/015616
(87) International publication number: WO 2025/084752

(57) **Abstract**

A forming apparatus according to an embodiment of the present disclosure may form a cup portion in a pouch film. The forming apparatus may include a die having a forming space; a stripper configured to hold the pouch film from above the die; a first punch selectively placed in the forming space; and a pressing unit configured to apply air pressure or hydraulic pressure to the pouch film to draw a part of the pouch film into the forming space. The first punch may include a support surface defining an upper surface of the first punch; and a recess portion recessed downward from the support surface.

## Description

### TECHNICAL FIELD

### CROSS-REFERENCE TO RELATED APPLICATIONS

The present application claims priority to Korean Patent Application No. 10-2023-0138682 filed on October 17, 2023 and Korean Patent Application No. 10-2024-0139708 filed on October 14, 2024 in the Republic of Korea, the disclosures of which are incorporated herein by reference.

### TECHNICAL FIELD

The present disclosure relates to a forming apparatus and method for forming a pouch-type battery case, and a pouch-type battery case manufactured thereby.

### BACKGROUND ART

In general, the types of secondary batteries include nickel cadmium batteries, nickel hydrogen batteries, lithium-ion batteries and lithium-ion polymer batteries. Secondary batteries are used in not only small products such as digital cameras, P-DVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

To manufacture a secondary battery, first, an electrode active material slurry is applied to a positive current collector and a negative current collector to manufacture a positive electrode and a negative electrode, and the positive electrode and the negative electrode are stacked on both sides of a separator to form an electrode assembly of a predetermined shape. Additionally, the electrode assembly is received in a battery case, followed by electrolyte injection and sealing.

Secondary batteries are classified into a pouch type and a can type according to the material of the case accommodating the electrode assembly. The pouch type accommodates the electrode assembly in the pouch made of a flexible polymer material. Additionally, the can type accommodates the electrode assembly in the case made of a metal or plastic material.

The pouch-type battery case is generally manufactured by pressing a pouch film having flexibility to form a cup portion. Additionally, when the cup portion is formed, the electrode assembly is received in the cup portion and side sealing is carried out to manufacture a secondary battery.

In the press forming, drawing is performed by inserting the pouch film into a forming apparatus such as a press machine and applying pressure to the pouch film with a punch to draw the pouch film. Hereinafter, it will be described in more detail.

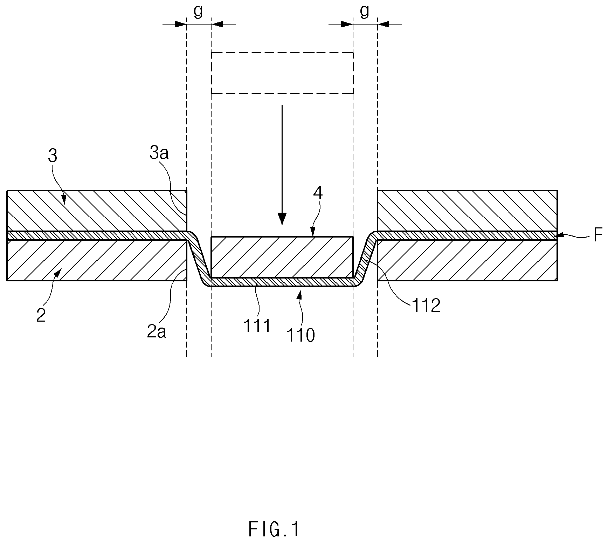

FIG. 1 is a schematic diagram of the conventional forming apparatus.

The conventional forming apparatus includes a die 2 on which the pouch film F is mounted and having a forming space 2a, a stripper 3 to hold the pouch film F from above the die 2 and having an opening 3a, and the punch 4 to draw the pouch film F through the opening 3a. Additionally, when the die 2 and the stripper 3 move up with respect to the punch 4 or the punch 4 moves down with respect to the die 2 and the stripper 3, the punch 4 may apply pressure to the pouch film F, so a part of the pouch film F may be drawn into the forming space 2a, to form the cup portion 110 in the pouch film F.

However, the conventional forming apparatus needs a predetermined clearance (g) between the outer periphery of the punch 4 and the inner periphery of the forming space 2a of the die 2 to prevent wrinkling or tearing in the pouch film F by the frictional force during the relative movement of the punch 4 and the die 2. Accordingly, a peripheral surface 112 of the cup portion 110 formed in the pouch film F is slightly inclined relative to a bottom surface 111 of the cup portion 110. As a consequence, an empty space not occupied by the electrode assembly (not shown) is created in the cup portion 110, resulting in reduction of energy density of the secondary battery.

Additionally, the conventional forming apparatus experiences stress concentration at the corner of the punch 4 when the punch 4 presses the pouch film F. As a consequence, in the deep forming of the cup portion 110 in the pouch film F, the corner of the cup portion 110 is overly drawn, causing a reduction in remaining thickness and cracks or pin-holes at the corner of the cup portion 110.

### [Related Art Document] KR 10-2023-0029457 A (published on March 3, 2023)

### SUMMARY

### TECHNICAL PROBLEM

The present disclosure is directed to providing a forming apparatus and method for forming a sharp corner of a cup portion while maintaining a large remaining thickness of the corner.

The present disclosure is further directed to providing a pouch-type battery case manufactured by the forming apparatus or method.

### TECHNICAL SOLUTION

A forming apparatus according to an embodiment of the present disclosure may form a cup portion in a pouch film. The forming apparatus may include a die having a forming space; a stripper configured to hold the pouch film from above the die; a first punch selectively placed in the forming space; and a pressing unit configured to apply air pressure or hydraulic pressure to the pouch film to draw a part of the pouch film into the forming space. The first punch may include a support surface defining an upper surface of the first punch; and a recess portion recessed downwardly from the support surface.

The support surface may be extended along a peripheral direction of the first punch.

The support surface may be parallel to an upper surface of the die.

A connection edge connecting the support surface to an inner periphery of the recess portion may be rounded.

When the first punch is placed in the forming space, the support surface may be located at a same height as an upper surface of the die.

The forming apparatus may further include a second punch having a flat upper surface, and placed in the forming space after the first punch is removed from the forming space.

When the second punch is placed in the forming space, the upper surface of the second punch may be located at a lower height than an upper surface of the die.

The stripper may have a pressing space at a location corresponding to the forming space. The pressing unit may be configured to apply the air pressure or hydraulic pressure to the pouch film through the pressing space.

A forming method according to an embodiment of the present disclosure may form a cup portion in a pouch film. The forming method may include the steps of: holding the pouch film between a die and a stripper; and applying pressing to the pouch film using air pressure or hydraulic pressure to draw a part of the pouch film into a forming space of the die. The step of applying pressing to the pouch film may include the steps of: placing a first punch in the forming space, the first punch including a support surface defining an upper surface thereof, and a recess portion recessed downward from the support surface; and applying the air pressure or hydraulic pressure to the pouch film in a state that the first punch is placed in the forming space.

When the first punch is placed in the forming space, the support surface may be located at a same height as an upper surface of the die.

The step of applying pressing to the pouch film may further include the steps of: removing the first punch from the forming space, and placing a second punch having a flat upper surface in the forming space; and applying the air pressure or hydraulic pressure to the pouch film in a state that the second punch is placed in the forming space.

When the second punch is placed in the forming space, the upper surface of the second punch may be located at a lower height than an upper surface of the die.

A pouch-type battery case according to an embodiment of the present disclosure may include a cup portion having a recessed shape; and a terrace portion located on at least part of a periphery of the cup portion. The cup portion may include a bottom surface; a plurality of peripheral surfaces connecting the bottom surface to the terrace portion; and a thickness edge connecting adjacent peripheral surfaces among the plurality of peripheral surfaces. A bottom surface side radius of curvature of the thickness edge may be smaller than 1.4 times a radius of curvature of the thickness edge in a cross-sectional view perpendicular to the bottom surface.

The bottom surface side radius of curvature of the thickness edge may be less than 10 mm.

The bottom surface side radius of curvature of the thickness edge may be larger than a terrace portion side radius of curvature of the thickness edge.

### ADVANTAGEOUS EFFECTS

According to an exemplary embodiment of the present disclosure, as the cup portion is formed by drawing the pouch film by air pressure or hydraulic pressure, it may be possible to minimize stress concentration on the corner of the cup portion. Accordingly, in the deep forming of the cup portion, it may be possible to maintain the large remaining thickness of the corner, and prevent cracks or pin-holes at the corner.

Additionally, the radius of curvature of the edge and the corner of the cup portion may be minimized and the peripheral portion of the cup portion may be almost vertically formed. Accordingly, the secondary battery may look sharp and energy density may be improved.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a schematic diagram of a conventional forming apparatus.
FIG. 2 is a schematic diagram of a forming apparatus according to an embodiment of the present disclosure.
FIG. 3 is a plan view of a die shown in FIG. 2.
FIG. 4 is a perspective view of a first punch shown in FIG. 2.
FIG. 5 is a flowchart of a forming method performed by a forming apparatus according to an embodiment of the present disclosure.
FIGS. 6a and 6b are diagrams illustrating the operation of a forming apparatus according to an embodiment of the present disclosure.

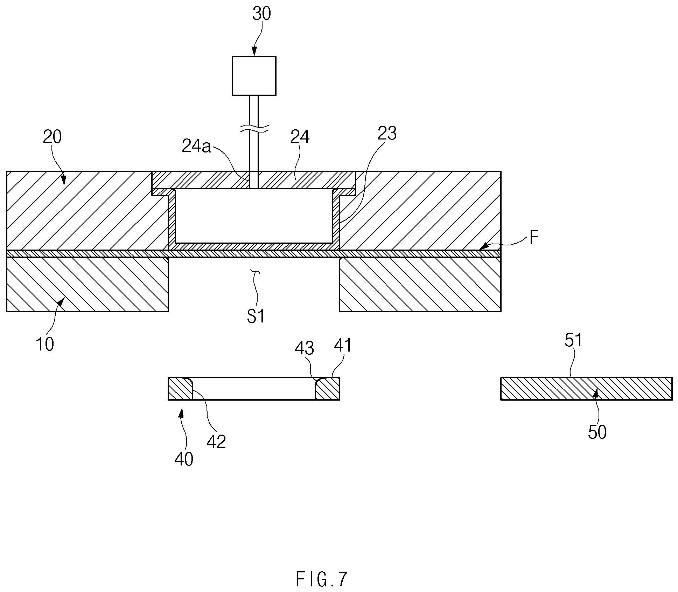

FIG. 7 is a schematic diagram of a forming apparatus according to another embodiment of the present disclosure.
FIG. 8 is a schematic diagram of a pouch-type battery case according to an embodiment of the present disclosure.
FIG. 9 is an enlarged view of a thickness edge shown in FIG. 8 and its neighborhood when viewed from outside.
FIG. 10 is a cross-sectional view of FIG. 9, taken along the line A-A'.
FIG. 11 is a perspective view of a first punch according to Comparative Example.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

Each component of a secondary battery according to an embodiment of the present disclosure is schematically shown in the drawings, and the size of components or the thickness of lines may be exaggerated for convenience of understanding.

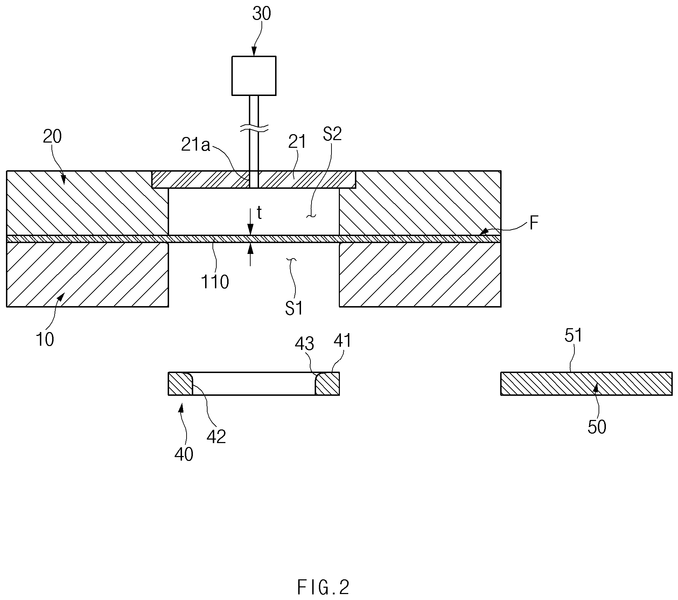

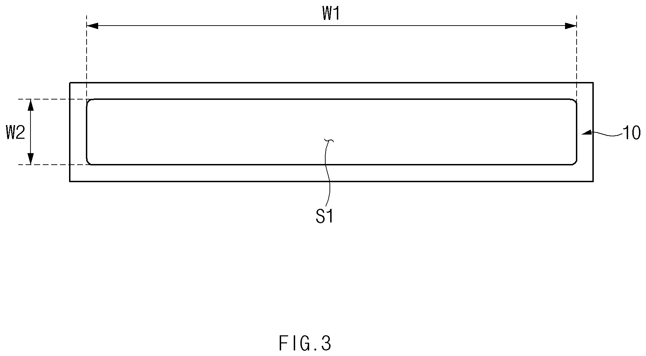

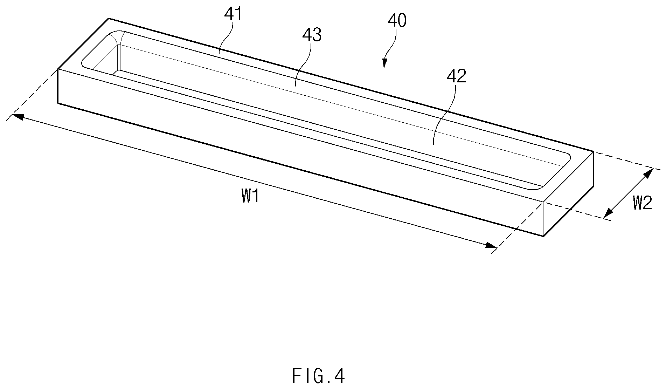

FIG. 2 is a schematic diagram of a forming apparatus according to an embodiment of the present disclosure, FIG. 3 is a plan view of a die shown in FIG. 2, and FIG. 4 is a perspective view of a first punch shown in FIG. 2.

The forming apparatus according to an embodiment of the present disclosure may include the die 10 having a forming space S1, a stripper 20 to hold a pouch film F from above the die 10, a pressing unit 30 to apply air pressure or hydraulic pressure to the pouch film F, and the first punch 40 that is optionally placed in the forming space S1. The forming apparatus may further include a second punch 50 that is placed in the forming space S1 after the first punch 40 is removed from the forming space S1.

The pouch film F may have a predetermined thickness (t). The pouch film F may be a laminate sheet including a pair of resin layers located at two outermost sides, and a metal layer located between the pair of resin layers.

The pouch film F may be mounted on the upper surface of the die 10. The die 10 may have the forming space S1 recessed downward from the upper surface. The forming space S1 may have an open top and an open bottom. When the pouch film F is mounted on the upper surface of the die 10, the pouch film F may cover the forming space S1 from the above. Additionally, the first punch 40 and the second punch 50 as described below may be inserted into the forming space S1 from the bottom of the die 10.

The cross section of the forming space S1 of the die 10 may be approximately rectangular in shape. More specifically, the forming space S1 may have a first width W1 in a first direction and a second width W2 in a second direction perpendicular to the first direction. That is, the first direction may be parallel to the horizontal direction of the forming space S1, and the second direction may be parallel to the vertical direction of the forming space S1. Additionally, the first width W1 may be a horizontal width of the forming space S1, and the second width W2 may be a vertical width of the forming space S1.

The stripper 20 may face the die 10 with the pouch film F interposed between them. The stripper 20 may be configured to move up and down with respect to the die 10. When the stripper 20 moves up, the pouch film F may be inserted in between the die 1 and the stripper 20, and subsequently, when the stripper 20 moves down, the pouch film F may be held between the die 10 and the stripper 20.

The stripper 20 may have a pressing space S2. The pressing space S2 may be formed at a location corresponding to the forming space S1 of the die 10.

In the case of this embodiment, the pressing space S2 may have a closed top and an open bottom. More specifically, the stripper 20 may include a cover portion 21 to cover the pressing space S2 from the above. The cover portion 21 that is separate and different from the stripper 20 may be fastened to the stripper 20, or the cover portion 21 may be integrally formed with the stripper 20.

The cover portion 21 may have a passage 21a that communicates the pressing space S2 with the pressing unit 30 as described below. However, the present disclosure is not limited thereto, and the passage 21a may be formed in the stripper 20.

When the stripper 20 holds the pouch film F, the pouch film F may cover the pressing space S2 from below. That is, in a state the pouch film F is held between the die 10 and the stripper 20, a part of the pouch film F may be located between the forming space S1 and the pressing space S2. Hereinafter, the part of the pouch film F located between the forming space S1 and the pressing space S2 is referred to as a target area.

The pressing unit 30 may apply air pressure or hydraulic pressure to the pouch film F through the pressing space S2. Thus, the target area of the pouch film F may be drawn into the forming space S1, and the target area may be formed into a cup portion. Accordingly, the target area 110 is indicated by '110' that is the same reference sign as the cup portion of FIG. 1.

As the target area 110 of the pouch film F is drawn into the forming space S1 and formed into the cup portion 110, the horizontal length of the cup portion 110 may be identical or similar to the first width W1 of the forming space S1, and the vertical length of the cup portion 110 may be identical or similar to the second width W2 of the forming space S1.

The pressing unit 30 is not limited to a particular configuration. In the case of this embodiment, the pressing unit 30 may apply hydraulic pressure to the target area 110. For example, the pressing unit 30 may include a hydraulic pump.

More specifically, the pressing unit 30 may control the internal pressure of the pressing space S2 by allowing gas to enter or exit the pressing space S2 through the passage 21a. Accordingly, when the internal pressure of the pressing space S2 is higher than the internal pressure (for example, atmospheric pressure) of the forming space S1, the target area 110 may be drawn into the forming space S1 by a pressure difference between the forming space S1 and the pressing space S2.

That is, as isostatic press acts on the target area 110, the thickness (t) of the target area 110 may be uniformly reduced over the entire area during the drawing of the target area 110. Accordingly, it may be possible to minimize local stress concentration on the target area 110.

Meanwhile, the first punch 40 and the second punch 50 may be inserted into the forming space S1 from the bottom of the die 10. More specifically, the first punch 40 and the second punch 50 may be inserted into the forming space S1 in the alternative.

For example, the first punch 40 and the second punch 50 may horizontally move with respect to the die 10, and the die 10 may move up and down with respect to the first punch 40 and the second punch 50. In this case, in an aligned state that the first punch 40 is located at the lower part of the forming space S1, when the die 10 moves down, the first punch 40 may be inserted into the forming space S1. Additionally, in an aligned state that the second punch 50 is located at the lower part of the forming space S1, when the die 10 moves down, the second punch 50 may be inserted into the forming space S1.

However, the present disclosure is not limited thereto, and the die 10 may horizontally move with respect to the first punch 40 or the second punch 50, or the first punch 40 or the second punch 50 may move up and down with respect to the die 10.

The outer periphery of each punch 40, 50 may be in contact with or adjacent to the inner periphery of the forming space S1 of the die 10. This is because the pouch film F does not go in between the outer periphery of the punch 40, 50 and the inner periphery of the forming space S1.

For example, as shown in FIG. 4, the first punch 40 may have the first width W1 in the first direction and the second width W2 in the second direction perpendicular to the first direction to conform to the shape of the forming space S1 of the die 10. The first direction may be parallel to the horizontal direction of the first punch 40, and the second direction may be parallel to the vertical direction of the first punch 40. Additionally, the first width W1 may be the horizontal width of the first punch 40, and the second width W2 may be the vertical width of the first punch 40. However, to smoothly insert the first punch 40 into the forming space S1, the first width W1 of the first punch 40 may be slightly smaller than the first width W1 of the forming space S1, and the second width W2 of the first punch 40 may be slightly smaller than the second width W2 of the forming space S1. This description may be equally applied to the second punch 50.

The first punch 40 may include a support surface 41 defining the upper surface of the first punch 40, and a recess portion 42 recessed downward from the support surface 41. The support surface 41 may be parallel to the upper surface of the die 10. The support surface 41 may be flat.

The support surface 41 may be extended along the peripheral direction of the first punch 40. The support surface 41 may be located around the outer side of the recess portion 42. More specifically, the recess portion 42 may be formed in the central portion of the first punch 40, and the support surface 41 may form the upper surface of the edge portion of the first punch 40.

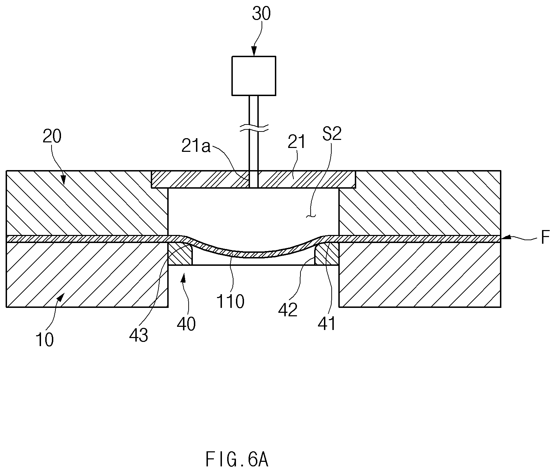

When the first punch 40 is placed in the forming space S1, the support surface 41 may be located at the same height as the upper surface of the die 10. Accordingly, in a state that the first punch 40 is placed in the forming space S1, the edge portion of the target area 110 may contact the support surface 41, and the central portion of the target area 110 may be drawn into the recess portion 42 (see FIG. 6a).

A connection edge 43 connecting the support surface 41 to the inner periphery of the recess portion 42 may be rounded. More specifically, the connection edge 43 may have a predetermined radius of curvature. Accordingly, it may be possible to prevent cracks in the target area 110 when the central portion of the target area 110 is drawn into the recess portion 42.

After the first punch 40 is removed from the forming space S1, the second punch 50 may be inserted into the forming space S1.

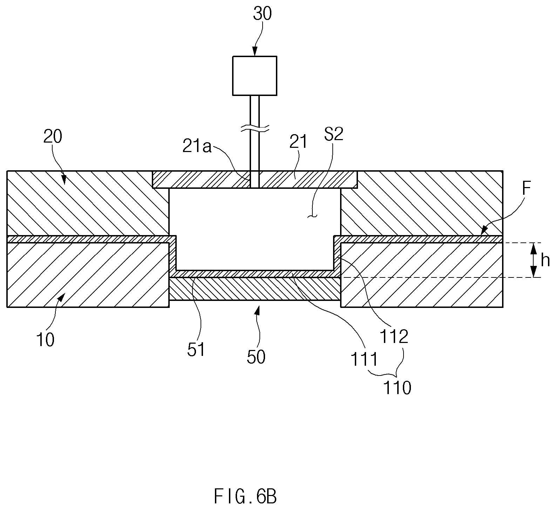

The upper surface 51 of the second punch 50 may be flat. When the second punch 50 is placed in the forming space S1, the upper surface 51 of the second punch 50 may be located at a lower height than the upper surface of the die 10. That is, a predetermined height difference (h) may be formed between the upper surface 51 of the second punch 50 and the upper surface of the die 10 (see FIG. 6b).

In a state that the second punch 50 is inserted into the forming space S1 of the die 10, the target area 110 may be subjected to pressure by the pressing unit 30, and a part of the target area 110 may contact the upper surface 51 of the second punch 50.

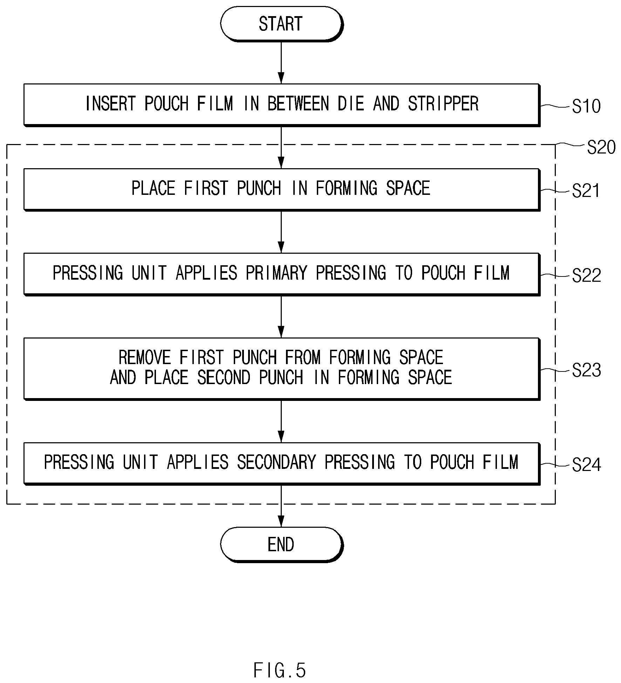

FIG. 5 is a flowchart of a forming method performed by the forming apparatus according to an embodiment of the present disclosure, and FIGS. 6a and 6b are diagrams illustrating the operation of the forming apparatus according to an embodiment of the present disclosure.

The forming method according to this embodiment may include the step S10 of holding the pouch film F between the die 10 and the stripper 20, and the step S20 of applying pressing to the pouch film F using air pressure or hydraulic pressure.

In the step S10 of holding the pouch film F, in a state that a predetermined gap is formed between the die 10 and the stripper 20, the pouch film F may be inserted in between the die 10 and the stripper 20. Subsequently, the gap may be reduced and the pouch film F may be held between the die 10 and the stripper 20. In this instance, the target area 110 of the pouch film F may be located between the forming space S1 of the die 10 and the pressing space S2 of the stripper 20.

In the step S20 of applying pressing to the pouch film F, the pressing unit 30 may apply air pressure or hydraulic pressure to the pouch film F through the pressing space S2 of the stripper 30.

In the case of this embodiment, the pressing unit 30 may apply air pressure to the target area 110. The pressing unit 30 may apply isostatic pressing to the pouch film F, to be more specific, the target area 110 by increasing the internal pressure of the second space S2 through the passage 21a. Accordingly, the target area 110 may be drawn into the forming space S1, and formed into the cup portion 110.

More specifically, the step S20 of applying pressing to the pouch film F may include the step S21 of placing the first punch 40 in the forming space S1 of the die 10, and the step S22 of applying air pressure or hydraulic pressure to the pouch film F in a state that the first punch 40 is placed in the forming space S1.

Referring to FIG. 6a, the first punch 40 may be inserted into the forming space S1 of the die 10. The first punch 40 may be disposed such that the support surface 41 may be located at the same height as the upper surface of the die 10.

The pressing unit 30 may apply air pressure or hydraulic pressure to the pouch film F through the pressing space S2 of the stripper 30. The pressure applied to the target area 110 by the pressing unit 30 may be properly adjusted to prevent the remaining thickness of the target area 110 from excessively thinning.

By the first punch 40, the center side part (hereinafter, 'first area') of the target area 110 may be drawn into the recess portion 42, and the edge side part (hereinafter, 'second area') of the target area 110 may contact the support surface 41 to keep it flat. Subsequently, the first area may be formed into a bottom surface 111 (see FIG. 6b) of the cup portion 110. A part of the second area may be formed into a peripheral surface 112 (see FIG. 6b) of the cup portion 110. Another part of the second area may be formed into an edge (a punch edge) connecting the peripheral surface 112 to the bottom surface 111. Still another part of the second area may be formed into a corner at which a pair of adjacent peripheral surfaces 112 and the bottom surface 111 meet.

For convenience, the first area is indicated by '111' that is the same reference sign as the bottom surface of the cup portion 110, and the second area is indicated by '112' that is the same reference sign as the peripheral surface of the cup portion 110.

As described above, as isostatic press acts on the target area 110, the first area 111 may be uniformly drawn into the recess portion 42 to form a predetermined curved surface. The curved surface of the first area 111 may be lowest at the center, and become higher toward the support surface 41.

The step S20 of applying pressing to the pouch film F may further include the step S23 of removing the first punch 40 from the forming space S1 and placing the second punch 50 in the forming space S1, and the step S24 of applying air pressure or hydraulic pressure to the pouch film F in a state that the second punch 50 is placed in the forming space S20.

That is, the pressing unit 30 may apply primary pressing to the pouch film F when the first punch 40 is placed in the forming space S1, and apply secondary pressing to the pouch film F when the second punch 50 is placed in the forming space S1.

Referring to FIG. 6b, after the first punch 40 is removed from the forming space S1, the second punch 50 may be inserted into the forming space S1. The second punch 50 may be disposed such that the flat upper surface 51 may be located at a lower height than the upper surface of the die 10. That is, the predetermined height difference (h) may be formed between the upper surface 51 of the second punch 50 and the upper surface of the die 10. The second punch 50 may be disposed at a lower height than the height at which the first punch 40 has been located. More specifically, the upper surface 51 of the second punch 50 may be located at a lower height than the lowest location of the first area 111 that has been drawn.

Additionally, the pressure applied to the pouch film F when the second punch 50 is placed in the forming space S1 may be higher than the pressure applied to the pouch film F when the first punch 40 is placed in the forming space S1. That is, the pressing unit 30 may apply higher pressure when the second punch 50 is inserted into the forming space S1 than when the first punch 40 is inserted into the forming space S1.

Accordingly, most of the first area 111 of the pouch film F may contact the upper surface 51 of the second punch 50 to form the bottom surface of the cup portion 110, and most of the second area 112 may contact the inner periphery of the forming space S1 to form the peripheral surface of the cup portion 110.

The cup portion 110 is generally formed such that the remaining thickness of the bottom surface 111 is larger, and the remaining thickness of the edge (punch edge) connecting the bottom surface 111 to the peripheral surface 112, and the corner at which the pair of adjacent peripheral surfaces 112 and the bottom surface 111 meet are smaller. That is, intensive drawing may take place at the edge and the corner in the forming process of the cup portion 110, causing cracks. Thus, there is a limitation in forming the sharp edge and corner.

However, the cup portion 110 formed by the forming apparatus or method according to the present disclosure may have the large remaining thickness of the edge and the corner and the sharp edge and corner.

More specifically, when primary pressing is applied to the pouch film F in a state that the first punch 40 is placed in the forming space S1 (S22), primary drawing may concentrate on the first area 111 that will be the bottom surface of the cup portion 110, and the second area 112 that will be the edge and the peripheral surface of the cup portion 110 may be fully preserved by the support surface 41 of the first punch 40.

Subsequently, when secondary pressing is applied to the pouch film F in a state that the second punch 50 is placed in the forming space S1 (S24), the undrawn second area 112 may be sufficiently drawn. Accordingly, the pouch film F, to be more specific, the target area 110 may be uniformly drawn over the entire area, the remaining thickness of the edge and the corner of the cup portion 110 may be large, and the sharp edge and corner may be formed.

FIG. 6 is a schematic diagram of the forming apparatus according to another embodiment of the present disclosure.

Hereinafter, the same description as the above-described forming apparatus according to an embodiment is incorporated herein and differences will be described.

The forming apparatus according to this embodiment may further include a flexible bag 23.

The flexible bag 23 may be disposed in the pressing space S2 (see FIG. 2) of the stripper 20. The flexible bag 23 may contact the pouch film F, to be more specific, the target area 110. The flexible bag 23 may apply pressure to the target area 110 when expanded by the pressing unit 30, and the target area 110 may be drawn into the forming space S1.

The forming apparatus may include a bag body 24 connected to the flexible bag 23.

The bag body 24 may cover the internal space of the flexible bag 23. That is, the internal space of the flexible bag 23 may be defined by the flexible bag 23 and the bag body 24.

The bag body 24 may cover the pressing space S2 of the stripper 20. More specifically, the pressing space S2 of the stripper 20 according to this embodiment may have an open top. Additionally, in a state that the flexible bag 23 is inserted into the pressing space S2, the bag body 24 may cover the pressing space S2 from the above. That is, the bag body 24 may play a role of the cover portion 21 (see FIG. 2) described in the previous embodiment. However, the present disclosure is not limited thereto, and the cover portion 21 and the bag body 24 may be separately equipped.

The bag body 24 may have a passage 24a that communicates the pressing unit 30 with the internal space of the flexible bag 23.

The pressing unit 30 may control the internal pressure of the flexible bag 23 by allowing a fluid to enter and exit through the passage 24a. The fluid is a term including a liquid and a gas. That is, the pressing unit 30 may apply air pressure or hydraulic pressure to the target area 110. For example, the pressing unit 30 may include an air pump or a hydraulic pump.

Accordingly, when the internal pressure of the flexible bag 23 is higher than the internal pressure (for example, atmospheric pressure) of the forming space S1, the target area 110 may be drawn into the forming space S1 by a pressure difference between the forming space S1 and the internal space of the flexible bag 23.

That is, as isostatic press acts on the target area 110, the thickness (t) of the target area 110 may be uniformly reduced over the entire area during the drawing of the target area 110. Accordingly, it may be possible to minimize local stress concentration on the target area 110.

In particular, when the pressing unit 30 applies hydraulic pressure to the pouch film F using a liquid, the liquid may not touch the stripper 20 and the pouch film F by the flexible bag 23. Accordingly, it may be possible to prevent the risk that the forming apparatus will fail or malfunction by the liquid.

Those skilled in the art will easily understand that the above-described forming method according to an embodiment may be performed by the forming apparatus according to another embodiment of the present disclosure, and the cup portion 110 of a pouch-type battery case may be formed.

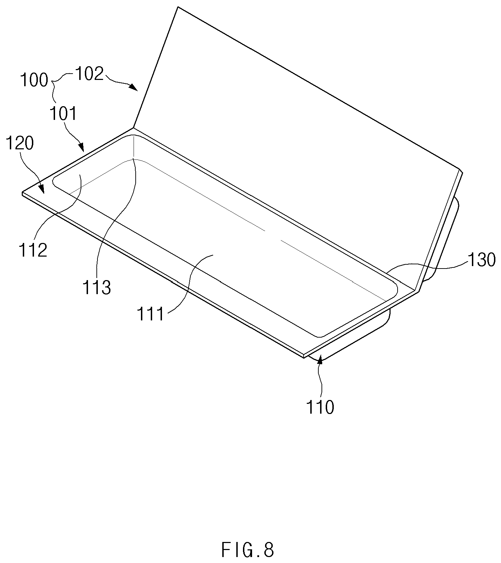

FIG. 8 is a schematic diagram of the pouch-type battery case according to an embodiment of the present disclosure.

The pouch-type battery case 100 (hereinafter, 'battery case') according to an embodiment of the present disclosure may be formed by the above-described forming apparatus and method. The battery case 100 may include the cup portion 110 having the recessed shape, and a terrace portion 120 located on at least part of the periphery of the cup portion 110. The terrace portion 120 may be an unformed part of the pouch film F in which the cup portion 110 is not formed. The terrace portion 120 may be connected to the top of the peripheral surface 112 of the cup portion 110. The cup portion 110 may be recessed from the terrace portion 120 by a predetermined depth to form a space in which an electrode assembly (not shown) is accommodated.

More specifically, the battery case 100 may be formed by sealing a pair of cases 101, 102 connected with a folding portion 130. However, the present disclosure is not limited thereto, and the pair of cases 101, 102 in separated state may be sealed together to form the battery case 200.

Additionally, at least one of the pair of cases 101, 102 may include the cup portion 110. For example, the first case 101 may include the cup portion 110, and the second case 102 may not include the cup portion 110. In this case, the first case 101 may include the cup portion 110 and the terrace portion 120, and the second case 102 may be a flat sheet. In a state that the electrode assembly is received in the cup portion 110, the folding portion 130 may be folded so that the second case 102 may cover the cup portion 110. Additionally, the terrace portion 120 of the first case 101 and the edge portion of the second case 102 may be joined together to form a sealing portion.

Meanwhile, the cup portion 110 may include the bottom surface 111 and the plurality of peripheral surfaces 112. Each peripheral surface 112 may connect the bottom surface 111 to the terrace portion 120. For example, the peripheral surface 112 may include four peripheral surfaces.

The bottom surface 111 may cover one surface of the electrode assembly, and the peripheral surfaces 112 may surround the periphery of the electrode assembly.

The cup portion 110 may include a thickness edge 113 connecting the adjacent peripheral surfaces 112 among the plurality of peripheral surfaces 112. The thickness edge 113 may be rounded. As the peripheral surface 112 of the cup portion 110 includes four peripheral surfaces, the thickness edge 113 may also include four thickness edges.

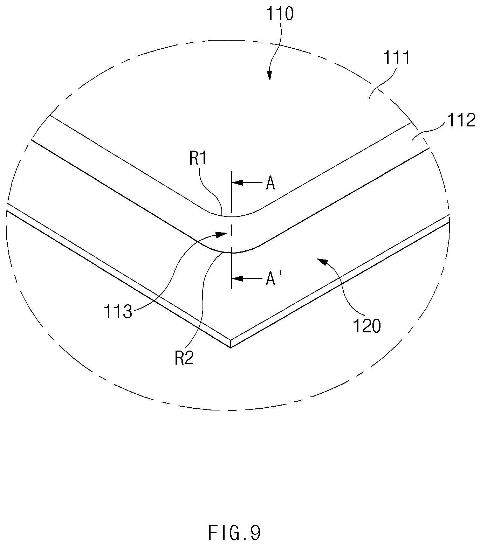

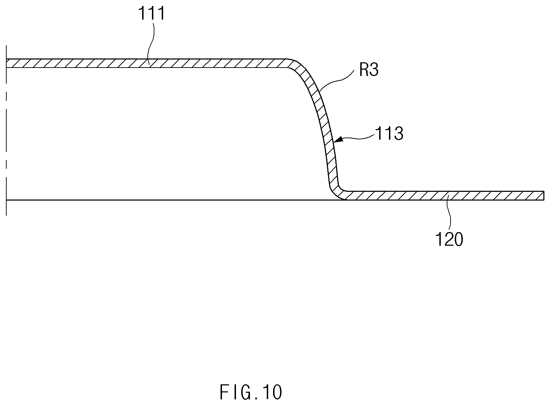

FIG. 9 is an enlarged view of the thickness edge shown in FIG. 8 and its neighborhood when viewed from outside, and FIG. 10 is a cross-sectional view of FIG. 9, taken along the line A-A'.

The thickness edge 113 may have a radius of curvature that varies depending on location. More specifically, the thickness edge 113 may have a bottom surface 111 side radius of curvature R1 (hereinafter, first radius of curvature), and a terrace portion 120 side radius of curvature R2 (hereinafter, second radius of curvature). Here, the radius of curvature of the thickness edge 113 may be defined on the basis of a view seen parallel to the bottom surface 111. That is, the first radius of curvature R1 and the second radius of curvature R2 may be defined on the basis of a view seen parallel to the bottom surface 111.

The first radius of curvature R1 may be defined at a location corresponding to the corner of the cup portion 110. The corner may be a portion where the pair of adjacent peripheral surfaces 112 and the bottom surface 111 meet.

The first radius of curvature R1 may be larger than the second radius of curvature R2. More specifically, the radius of curvature of the thickness edge 113 may be smaller as it goes from the bottom surface 111 of the cup portion 110 to the terrace portion 120.

Aside from this, as shown in FIG. 10, the thickness edge 113 may have a radius of curvature R3 (hereinafter, third radius of curvature) defined on the basis of a cross section view taken perpendicularly to the bottom surface 111.

The second radius of curvature R2 may be formed in reliance on the shape of the die 10. More specifically, the second radius of curvature R2 may be formed in reliance on the shape of the edge connecting the upper surface of the die 10 to the inner periphery of the forming space S1.

In contrast, the first radius of curvature R1 and the third radius of curvature R3 may be formed by the air pressure or hydraulic pressure applied by the pressing unit 30 in the forming process of the pouch film F. Accordingly, the first radius of curvature R1 and the third radius of curvature R3 of the battery case 100 according to this embodiment may be formed differently from the corresponding parts of the pouch-type battery case manufactured by the conventional method.

More specifically, the first radius of curvature R1 may be smaller than 1.4 times the third radius of curvature R3. Additionally, the first radius of curvature R1 may be larger than the third radius of curvature R3. That is, the first radius of curvature R1 may be 1 time to 1.4 times of the third radius of curvature R3.

Additionally, the first radius of curvature R1 may be less than 10 mm.

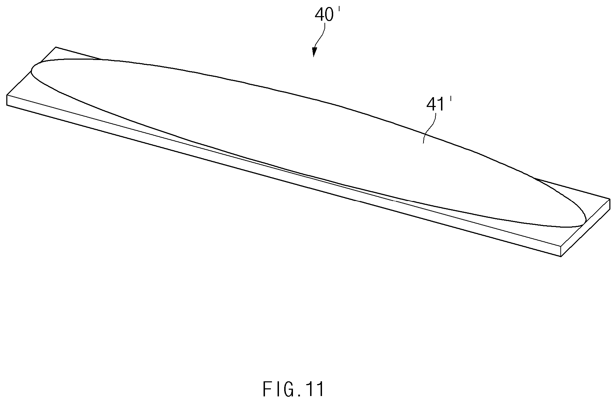

FIG. 11 is a perspective view of a first punch according to Comparative Example.

As opposed to the above-described first punch 40 (see FIG. 4) including the flat support surface 41 and the recess portion 42 recessed from it, the first punch 40' according to Comparative Example may have an upper surface 41' of a curved shape. More specifically, the upper surface 41' of the first punch 40' may have the curved shape with increasing height toward the center.

Hereinafter, an experimental example performed using each of the first punch 40' according to Comparative Example and the first punch 40 according to an embodiment of the present disclosure will be described.

In this experimental example, as described above, in a state that each first punch 40, 40' is placed in the forming space S1 of the die 10, the pressing unit 30 applied primary pressing to the pouch film F. Subsequently, the second punch 50 was placed in the forming space S1 of the die 10 and the pressing unit 30 applied secondary pressing to the pouch film F. In this instance, except for the first punch 40, 40', the other factors were the same, and the final depth of the cup portion 110 was set to 3 mm.

As a result, when the first punch 40' according to Comparative Example was used, the first radius of curvature R1 of the cup portion 110 was 13.122 mm, the second radius of curvature R2 was 3.524 mm, and the third radius of curvature R3 was 8.165 mm. In contrast, when the first punch 40 according to an embodiment of the present disclosure was used, the first radius of curvature R1 of the cup portion 110 was 9.424 mm, the second radius of curvature R2 was 3.095 mm, and the third radius of curvature R3 was 7.196 mm.

As described above, the cup portion 110 of the battery case 100 according to an embodiment of the present disclosure may have the first radius of curvature R1 that is smaller than 1.4 times the third radius of curvature R3. That is, the conditional equation R1/R3 > 1.4 may be satisfied. Additionally, the first radius of curvature R1 may be less than 10 mm.

In relation to this, when the first punch 40' according to Comparative Example is used, the first radius of curvature R1 is 13.122 mm which is larger than 10 mm. Additionally, R1/R3 = (13.122/8.165) = 1.607 which is larger than 1.4.

In contrast, when the first punch 40 according to an embodiment of the present disclosure is used, the first radius of curvature R1 is 9.424 mm which is smaller than 10 mm. Additionally, R1/R3 = (9.424/7.196) = 1.310 which is smaller than 1.4, and it can be seen that the conditional equation is satisfied.

Accordingly, it can be seen that the battery case 100 according to an embodiment of the present disclosure is manufactured by the forming apparatus or method according to an embodiment of the present disclosure. Additionally, it can be seen that the sharp corner of the cup portion 110 is formed.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

**[List of Reference Numerals]**

| | | | |
|---|---|---|---|
| 10: | Die | 20: | Stripper |
| 21: | Cover portion | 23: | Flexible bag |
| 24: | Bag body | 30: | Pressing unit |
| 40: | First punch | 41: | Support surface |
| 42: | Recess portion | 43: | Connection edge |
| 50: | Second punch | 51: | Upper surface (of second punch) |
| 110: | Target area (of pouch film), Cup portion (of pouch-type battery case) | | |
| 111: | First area (of pouch film), Bottom surface (of pouch-type battery case) | | |
| 112: | Second area (of pouch film), Peripheral surface (of pouch-type battery case) | | |
| 113: | Thickness edge | | |

## Claims

1. A forming apparatus for forming a cup portion in a pouch film, the forming apparatus comprising:
a die having a forming space;
a stripper configured to hold the pouch film from above the die;
a first punch selectively placed in the forming space; and
a pressing unit configured to apply air pressure or hydraulic pressure to the pouch film to draw a part of the pouch film into the forming space,
wherein the first punch includes:
a support surface defining an upper surface of the first punch; and
a recess portion recessed downwardly from the support surface.

2. The forming apparatus according to claim 1,
wherein the support surface is extended along a peripheral direction of the first punch.

3. The forming apparatus according to claim 1,
wherein the support surface is parallel to an upper surface of the die.

4. The forming apparatus according to claim 1,
wherein a connection edge connecting the support surface to an inner periphery of the recess portion is rounded.

5. The forming apparatus according to claim 1,
wherein when the first punch is placed in the forming space, the support surface is located at a same height as an upper surface of the die.

6. The forming apparatus according to claim 1, further comprising:
a second punch having a flat upper surface, and placed in the forming space after the first punch is removed from the forming space.

7. The forming apparatus according to claim 6,
wherein when the second punch is placed in the forming space, the upper surface of the second punch is located at a lower height than an upper surface of the die.

8. The forming apparatus according to claim 1,
wherein the stripper has a pressing space at a location corresponding to the forming space, and
wherein the pressing unit is configured to apply the air pressure or hydraulic pressure to the pouch film through the pressing space.

9. A forming method for forming a cup portion in a pouch film, the forming method comprising the steps of:
holding the pouch film between a die and a stripper; and
applying pressing to the pouch film using air pressure or hydraulic pressure to draw a part of the pouch film into a forming space of the die,
wherein the step of applying pressing to the pouch film comprises the steps of:
placing a first punch in the forming space, the first punch including a support surface defining an upper surface thereof, and a recess portion recessed downward from the support surface; and
applying the air pressure or hydraulic pressure to the pouch film in a state that the first punch is placed in the forming space.

10. The forming method according to claim 9,
wherein when the first punch is placed in the forming space, the support surface is located at a same height as an upper surface of the die.

11. The forming method according to claim 9,
wherein the step of applying pressing to the pouch film further comprises the steps of:
removing the first punch from the forming space, and placing a second punch having a flat upper surface in the forming space; and
applying the air pressure or hydraulic pressure to the pouch film in a state that the second punch is placed in the forming space.

12. The forming method according to claim 11,
wherein when the second punch is placed in the forming space, the upper surface of the second punch is located at a lower height than an upper surface of the die.

13. A pouch-type battery case comprising:
a cup portion having a recessed shape; and
a terrace portion located on at least part of a periphery of the cup portion,
wherein the cup portion includes:
a bottom surface;
a plurality of peripheral surfaces connecting the bottom surface to the terrace portion; and
a thickness edge connecting adjacent peripheral surfaces among the plurality of peripheral surfaces, and
wherein a bottom surface side radius of curvature of the thickness edge is smaller than 1.4 times a radius of curvature of the thickness edge in a cross-sectional view perpendicular to the bottom surface.

14. The pouch-type battery case according to claim 13,
wherein the bottom surface side radius of curvature of the thickness edge is less than 10 mm.

15. The pouch-type battery case according to claim 13,
wherein the bottom surface side radius of curvature of the thickness edge is larger than a terrace portion side radius of curvature of the thickness edge.
